(19) Europäisches Patentamt European Patent Office Office européen des brevets

(11) **EP 3 951 545 B1**

(12) **EUROPEAN PATENT SPECIFICATION**

(45) Date of publication and mention
of the grant of the patent:
**20.12.2023 Bulletin 2023/51**

(21) Application number: **21182495.8**

(22) Date of filing: **29.06.2021**

(51) International Patent Classification (IPC):
**G05D 1/02** *(2020.01)*

(52) Cooperative Patent Classification (CPC):
**G05D 1/0293;** G05D 2201/0206

(54) **PLATOON TRAVEL SYSTEM**

FAHRSYSTEM FÜR FAHRZEUGKOLONNE

SYSTÈME DE DÉPLACEMENT DE PELOTON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2020 JP 2020132621**

(43) Date of publication of application:
**09.02.2022 Bulletin 2022/06**

(73) Proprietor: **Panasonic Intellectual Property
Management Co., Ltd.
Osaka-shi, Osaka 540-6207 (JP)**

(72) Inventors:
• **NGUYEN, Duyhinh
Osaka 540-6207 (JP)**
• **SASAI, Hiroyuki
Osaka 540-6207 (JP)**

(74) Representative: **Vigand, Philippe et al
Novagraaf International SA
Chemin de l'Echo 3
1213 Onex - Genève (CH)**

(56) References cited:
• **Disneyresearchhub: "Multi-Robot System for
Artistic Pattern Formation", , 6 March 2012
(2012-03-06), XP055871323, Retrieved from the
Internet:
URL:https://www.youtube.com/watch?v=giPxyQ
9do-E&t=115s [retrieved on 2021-12-09]**
• **JAVIER ALONSO-MORA ET AL: "Multi-robot
system for artistic pattern formation", ROBOTICS
AND AUTOMATION (ICRA), 2011 IEEE
INTERNATIONAL CONFERENCE ON, IEEE, 9 May
2011 (2011-05-09), pages 4512-4517,
XP032034090, DOI: 10.1109/ICRA.2011.5980269
ISBN: 978-1-61284-386-5**

**Description**

BACKGROUND

1. Technical Field

The present disclosure relates to a platoon travel system that allows a plurality of moving objects to perform a platoon travel.

2. Description of the Related Art

A technology in which a front moving object is detected by a range sensor provided on a front side of another moving object and another moving object travels while following the front moving object is known as a technology of a platoon travel of moving objects. For example, Japanese Patent Unexamined Publication No. 2001-43498 discloses a technology in which, when entering a place where a U-turn cannot be performed, such as a dead end, a platoon is moved from the place by retreating the platoon along a route up to the place.

Further art is disclosed by a YouTube video, https://www.youtube.com/watch?v=giPxyQ9do-E regarding a technology for collectively controlling multiple robots. In this video, there is a disclosure of moving the robots arranged in a group by rotating them in the entire group unit.

SUMMARY

The present invention and advantageous aspects are defined in the appended claims.

BRIEF DESCRIPTION OF THE DRAWINGS

FIG. 1A is a front perspective view of a moving object in a platoon travel system according to an exemplary embodiment of the present disclosure;
FIG. 1B is a rear perspective view of the moving object;
FIG. 2 is a top view of the moving object;
FIG. 3 is a block diagram of a control system of the moving object;
FIG. 4 is a view illustrating an inter-moving-object distance in a plurality of moving objects during a platoon travel;
FIG. 5 is a diagram illustrating a relationship between the inter-moving-object distance and a travel speed of a moving object at the head of a platoon;
FIG. 6A is a diagram illustrating an example of a platoon travel of a plurality of moving objects in an air terminal;
FIG. 6B is a diagram illustrating the platoon travel of the plurality of moving objects following FIG. 6A;
FIG. 6C is a diagram illustrating the platoon travel of the plurality of moving objects following FIG. 6B;
FIG. 6D is a diagram illustrating the platoon travel of the plurality of moving objects following FIG. 6C;
FIG. 6E is a diagram illustrating the platoon travel of the plurality of moving objects following FIG. 6D; and
FIG. 6F is a diagram illustrating the platoon travel of the plurality of moving objects following FIG. 6E.

DETAILED DESCRIPTION

In a case of the technology described in Japanese Patent Unexamined Publication No. 2001-43498, in order to move from a place where a U-turn cannot be performed such as a dead end, each of the plurality of moving objects retreats in a state where a platoon relationship is maintained. At that time, it is necessary to check the rear of the plurality of moving objects. Further, when a user boarded the moving object, the user can feel uneasy due to the retreat of the moving object.

Therefore, it is an object of the present disclosure to move each of a plurality of moving objects from a place where a U-turn cannot be performed such as a dead end without retreating in a state where a platoon relationship is maintained.

Hereinafter, exemplary embodiments will be described in detail with reference to the drawings as appropriate. However, detailed description more than necessary may be omitted. For example, detailed description of well-known matters and duplicate descriptions for substantially the same configuration may be omitted. This is to avoid unnecessary redundancy of the following description and to facilitate understanding of those skilled in the art.

The inventor (and so on) provides the accompanying drawings and the following description for those skilled in the art to fully understand the present disclosure and does not intend to limit the subject matter described in the claims by those.

Hereinafter, a platoon travel system according to the exemplary embodiment of the present disclosure will be described with reference to the drawings.

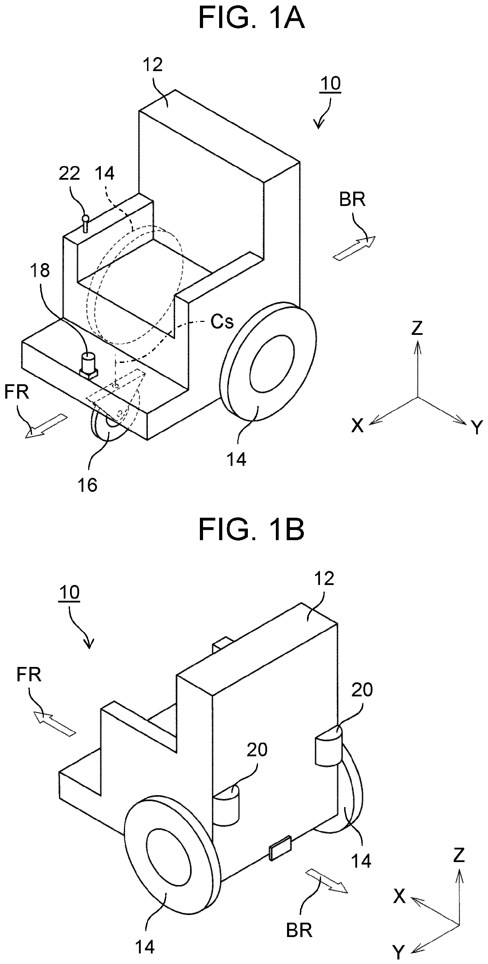

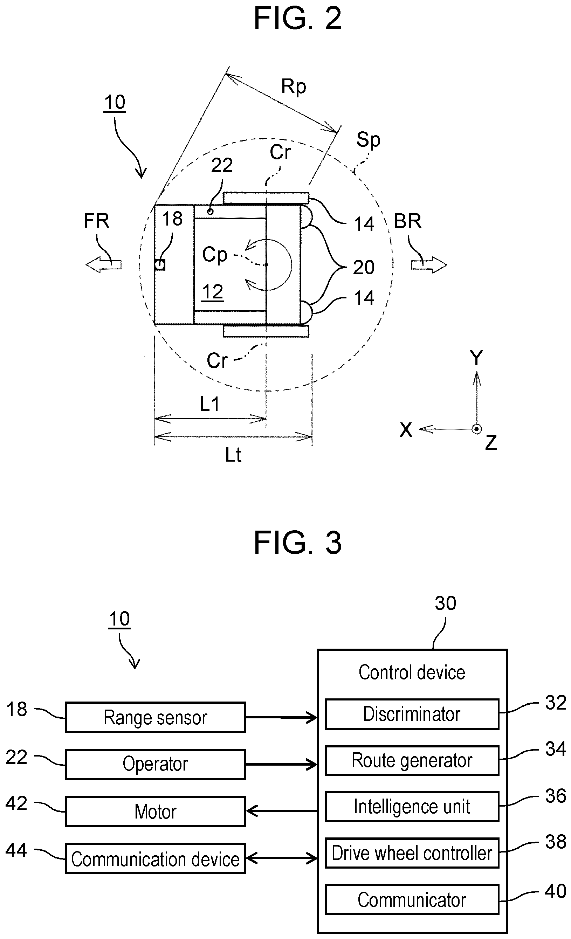

FIGS. 1A and 1B are perspective views schematically illustrating a moving object in a platoon travel system according to an exemplary embodiment of the present disclosure. FIG. 1A is a front perspective view of the moving object and FIG. 1B is a rear perspective view of the moving object. Further, FIG. 2 is a schematic top view of the moving object. In the drawings, an X-axis direction indicates a front-rear direction of the moving object, a Y-axis direction indicates a width direction, and a Z-axis direction indicates a height direction.

As illustrated in FIGS. 1A and 1B, each of the plurality of moving objects 10 included in the platoon travel system includes main body 12, a pair of drive wheels 14 provided on both sides of main body 12 in the width direction (Y-axis direction), quasi-wheel 16 provided in front of drive wheels 14, range sensor 18 provided on a front side of main body 12, and reflection member 20 provided on a rear side of main body 12. Further, in a case of the present exemplary embodiment, a user can board moving object 10, and moving object 10 has operator 22 such as a joystick for the user to operate moving object 10.

As illustrated in FIG. 2, the pair of drive wheels 14 are provided on main body 12 of moving object 10 such that respective rotation center lines Cr are located on the same straight line. When the pair of drive wheels 14 each rotates in a normal direction, moving object 10 moves (progresses) in forward direction FR. Further, when the pair of drive wheels 14 rotates in a reverse direction, moving object 10 moves (retreats) in backward direction BR. When one drive wheel 14 rotates in a normal direction and other drive wheel 14 rotates in a reverse direction, moving object 10 performs a pivot turn. Turn center line Cp is located on rotation center line Cr of drive wheels 14.

With respect to the pivot turn, turn center line Cp is located at the center of moving object 10 in the width direction (Y-axis direction) and is located at a position separated from a front end of moving object 10 by distance L1. Distance L1 is larger than half of total length Lt (distance from the front end to a rear end) of moving object 10. Therefore, moving object 10 requires circular turn space Sp centered on turn center line Cp when performing the pivot turn. That is, when an obstacle exists in turn space Sp, moving object 10 cannot perform the pivot turn. Radius (minimum turn radius) Rp of turn space Ps is determined by a shape of moving object 10.

As illustrated in FIG. 1A, quasi-wheel 16 can swing around swing center line Cs extending in the height direction (Z-axis direction) and can freely rotate and is provided in main body 12 of moving object 10.

As illustrated in FIG. 1A, range sensor 18 is a laser range sensor and is provided on a front side of main body 12 of moving object 10. The range sensor 18 is for acquiring information on a surrounding environment of moving object 10 and is particularly used in the present exemplary embodiment for acquiring information on a distance to another moving object.

As illustrated in FIG. 1B, reflection member 20 is an object to be detected by range sensor 18 and reflects laser light output from range sensor 18. Reflection member 20 is provided on a rear side of main body 12 of moving object 10.

As illustrated in FIG. 1A, operator 22 is provided on main body 12 of moving object 10 and is a device for receiving an instruction on an operation of moving object 10 of a user boarding moving object 10.

FIG. 3 is a block diagram of a control system of the moving object.

As illustrated in FIG. 3, moving object 10 has control device 30. Control device 30 includes discriminator 32, route generator 34, intelligence unit 36, drive wheel controller 38, and communicator 40.

Control device 30 of moving object 10 is configured with, for example, a CPU and a storage device that stores a program for operating the CPU. When the CPU operates according to the program, the CPU functions as discriminator 32, route generator 34, intelligence unit 36, drive wheel controller 38, and communicator 40. A processor such as a CPU may be prepared for each of discriminator 32, route generator 34, intelligence unit 36, drive wheel controller 38, and communicator 40. In this case, route information of each of moving object 10 may be intensively managed by a server outside moving object 10.

Discriminator 32 of control device 30 discriminates reflection member 20 in moving object 10 different from moving object 10 on which range sensor 18 is mounted, based on a detection result of range sensor 18. Specifically, discriminator 32 discriminates existence of reflection member 20 around moving object 10 based on the detection result of range sensor 18, and when the reflection member exists, the discriminator acquires information on a distance to reflection member 20 and a direction in which reflection member 20 exists. Thereby, it is possible to discriminate whether or not another moving object 10 exists around moving object 10, and when another moving object exists, a distance (inter-moving-object distance) to another moving object 10 and information on a direction in which another moving object 10 exists can be obtained.

Route generator 34 of control device 30 generates a route to which moving object 10 will move. For example, route generator 34 generates a route from a current place to a target stop place, based on information of the target stop place input by a user through operator 22 and information of the current place of moving object 10.

Intelligence unit 36 of control device 30 corrects a route generated by route generator 34 based on the detection result of range sensor 18. Further, intelligence unit 36 calculates the distance (inter-moving-object distance) to moving object 10 discriminated by discriminator 32 based on the detection result of range sensor 18.

Specifically, intelligence unit 36 determines existence of an obstacle on the route generated by route generator 34 based on the detection result of range sensor 18. When an obstacle exists, the route is corrected such that the obstacle can be avoided. Further, intelligence unit 36 calculates a distance (inter-moving-object distance) to another moving object 10 that is a follow-up target and moves in the front, based on the detection result of range sensor 18 during a platoon travel of the plurality of moving objects 10. Details of the platoon travel will be described below.

Drive wheel controller 38 of control device 30 controls rotations of the pair of drive wheels 14 by controlling motor 42 connected to the pair of drive wheels 14. For example, drive wheel controller 38 controls the rotations of drive wheels 14 based on an operation input of a user (passenger) to operator 22. Further, in order to adjust a travel speed of moving object 10, drive wheel controller 38 controls the rotations of drive wheel 14. Further, drive wheel controller 38 controls the rotations of drive wheels 14 in order to control the inter-moving-object distance during a platoon travel. Details of the platoon travel will be described below.

Communicator 40 of control device 30 communicates with another moving object 10 through communication device 44. Further, communicator 40 communicates with a communication terminal (not illustrated) carried by a user.

So far, a configuration of moving object 10 is described. Hereinafter, the platoon travel of the plurality of moving objects 10 will be described. During the platoon travel, travel operations are different between moving object 10 at a head of a platoon and other moving objects 10.

First, moving object 10 at the head of the platoon performs a manual travel or an autonomous travel.

In a case of the manual travel, moving object 10 at the head of the platoon travels based on an operation input to operator 22 of a user (passenger). Alternatively, leading moving object 10 may travel based on an operation input to a communication terminal of a user who does not board moving object 10.

In a case of the autonomous travel, moving object 10 at the head of the platoon acquires information such as a target stop place and arrival time at the stop place from a user as information necessary for the autonomous travel. For example, when operator 22 includes an operation panel (not illustrated), the information is acquired through the operation panel. Alternatively, the information may be acquired through the communication terminal of a user. Moving object 10 at the head of the platoon, that is, route generator 34 of control device 30 generates a route based on the information. Leading moving object 10 performs the autonomous travel according to the generated route.

In the platoon, moving objects 10 other than leading moving object 10 perform the autonomous travel. Specifically, a follow-up travel is performed which follows moving object 10 travelling in the front. In moving object 10 that performs the follow-up travel, discriminator 32 discriminates front moving object 10 based on a detection result of range sensor 18 and acquires information on a distance to front moving object 10 and a direction thereof. Route generator 34 generates a route on which moving object 10 travelling in the front travels along the route, based on the acquired distance and direction. Thereby, moving object 10 that performs the follow-up travel can follow moving object 10 travelling in the front, and as a result, the plurality of moving objects 10 can perform the platoon travel.

Hereinafter, a control of an inter-moving-object distance in a platoon of a plurality of moving objects will be described.

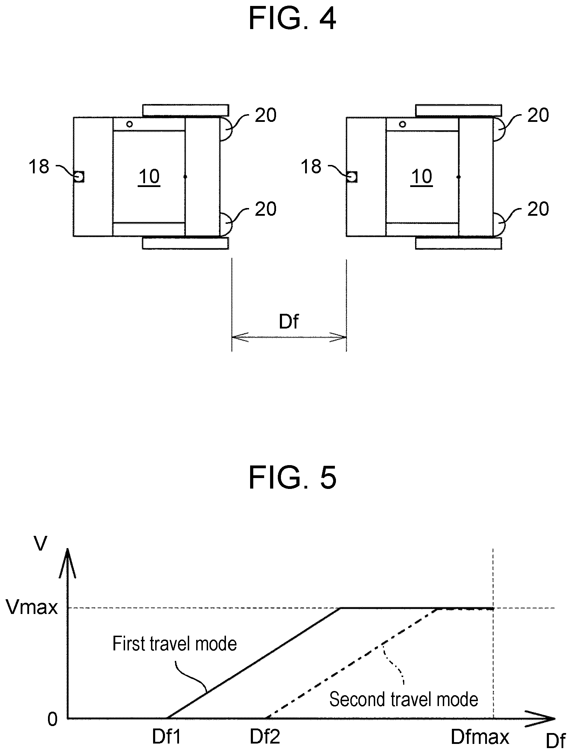

FIG. 4 is a view illustrating the inter-moving-object distance in a plurality of moving objects during a platoon travel.

As illustrated in FIG. 4, moving object 10 (moving object on the right side in FIG. 4) following moving object 10 (moving object on the left side in FIG. 4) located on the head side in the platoon performs a follow-up travel with inter-moving-object distance Df. Inter-moving-object distance Df is a distance from a rear end of moving object 10 (left side) on the head side to a front end of moving object 10 (right side) following the rear end. Each of other moving objects 10 except leading moving object 10 travels with inter-moving-object distance Df for front moving object 10. Therefore, range sensor 18 has a detection range capable of detecting reflection member 20 of moving object 10 having inter-moving-object distance Df.

Inter-moving-object distance Df is adjusted by a travel speed of the moving object at the head of the platoon.

FIG. 5 illustrates a relationship between the inter-moving-object distance and the travel speed of the moving object at the head of the platoon.

As illustrated in FIG. 5, when travel speed V of moving object 10 at the head of the platoon increases, inter-moving-object distances Df of other moving objects 10 except moving object 10 at the head of the platoon increases. As a result, other moving objects 10 except leading moving object 10 perform a follow-up travel in a state where inter-moving object distance Df greater than or equal to a braking distance is secured for front moving object 10. That is, when moving object 10 at the head of the platoon starts to travel, other moving objects 10 except moving object 10 at the head of the platoon start to travel when inter-moving-object distance Df for front moving object 10 becomes inter-moving-object distance Df1.

Further, when travel speed V of moving object 10 at the head of the platoon decreases, inter-moving-object distances Df of other moving objects 10 except moving object 10 at the head of the platoon decreases. When travel speed V of moving object 10 at the head of the platoon finally becomes zero (that is, when stopped), other moving objects 10 except moving object 10 at the head of the platoon stop with inter-moving-object distance Df1 to front moving object 10. Since a platoon length at the time of stopping is preferably short, inter-moving-object distance Df1 is preferably small.

Further, in the case of the present exemplary embodiment, the inter-moving-object distance is also controlled based on a stop place of a platoon. This will be described with reference to an example in which a plurality of moving objects perform a platoon travel in an air terminal.

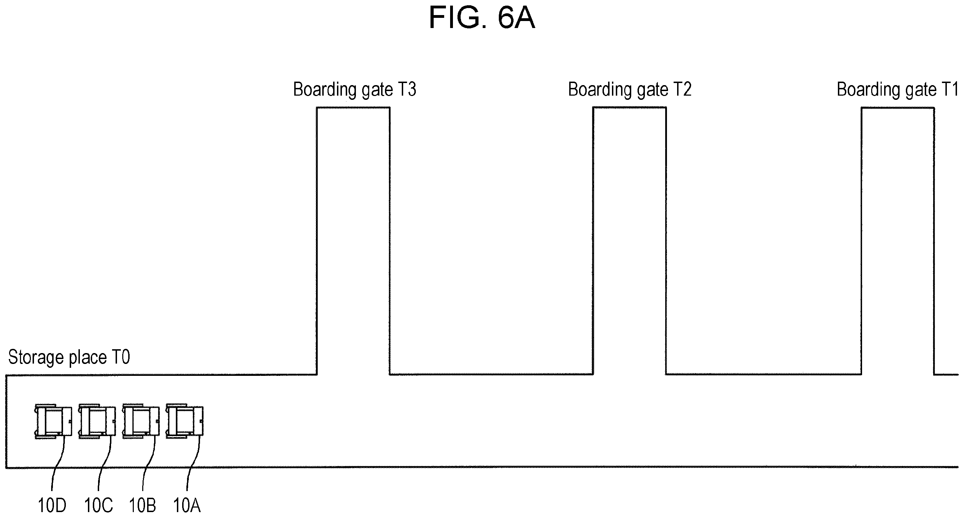

FIGS. 6A to 6F are views illustrating an example of a platoon travel of a plurality of moving objects in an air terminal. Four moving objects are illustrated in each of FIGS. 6A to 6F. In order to distinguish the four moving objects, the four moving objects are designated by reference numerals 10A to 10D.

As illustrated in FIG. 6A, the air terminal is provided with storage place T0 in which a plurality of moving objects 10A to 10D are stored, and a plurality of boarding gates T1 to T3. Here, an example will be described in which a platoon of the plurality of moving objects 10A to 10D moves from storage place T0 toward boarding gate T1 (stop place), stops at boarding gate T1, and then returns to storage place T0 again from boarding gate T1.

As illustrated in FIG. 6A, the plurality of moving objects 10A to 10D are stopped in a state of being arranged in a line at storage place T0. Specifically, moving object 10B is stopped behind moving object 10A, moving object 10C is stopped behind moving object 10B, and moving object 10D is stopped behind moving object 10C.

First, a user (for example, an airport staff) forms a platoon of the plurality of moving objects 10A to 10D. For example, the airport staff groups the plurality of moving objects 10A to 10D as one platoon through operator 22 of any one of the plurality of moving objects 10A to 10D. Alternatively, the plurality of moving objects 10A to 10D may be grouped through a communication terminal carried by the airport staff. At this time, the airport staff determines the moving object (here, moving object 10A) at the head of the platoon. For example, a moving object including operator 22 operated by the airport staff during grouping is determined as a head of the platoon. At the time of grouping, not only a leading moving object may be determined, but also a platoon sequence of a plurality of moving objects may be determined. For example, when a leading moving object is determined and then the remaining moving objects are associated with the leading moving object, a sequence of the association may be set as the platoon sequence.

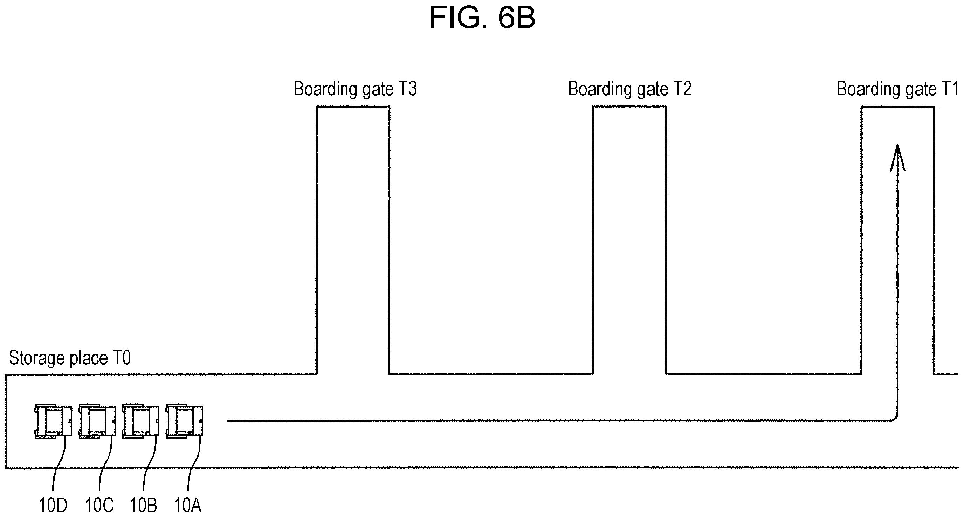

After a platoon formation of the plurality of moving objects 10A to 10D is completed, the plurality of moving objects 10A to 10D travel toward boarding gate T1 which is a target stop place as illustrated in FIG. 6B.

When moving object 10A at the head of a platoon travels in a manual travel, the airport staff boards leading moving object 10A and operate moving object 10A through operator 22. At this time, when a user (passenger) is transported from storage place T0 to boarding gate T1, passengers board each of remaining moving objects 10B to 10D. When picking up passengers at boarding gate T1, remaining moving objects 10B to 10D may be in an empty state.

Alternatively, an airport staff may operate leading moving object 10A through a communication terminal to be carried without boarding leading moving object 10A. In this case, the airport staff moves on foot together with the platoon of moving objects. At that time, the passenger may board leading moving object 10A.

When leading moving object 10A performs an autonomous travel, the airport staff inputs information necessary for the autonomous travel through operator 22 or a communication terminal of leading moving object 10A. Here, information of boarding gate T1 is input as information of a target stop place. Route generator 34 of control device 30 of leading moving object 10A generates a route to the target stop place based on the input information. In a case of the autonomous travel, an airport staff may not accompany the platoon.

When leading moving object 10A starts to travel toward a target stop place in a manual travel or the autonomous travel, moving object 10B behind moving object 10A starts to follow moving object 10A, moving object 10C behind moving object 10B starts to follow moving object 10B, and then moving object 10D behind moving object 10C starts to follow moving object 10C. Thereby, the plurality of moving objects 10A to 10D perform a platoon travel toward boarding gate T1.

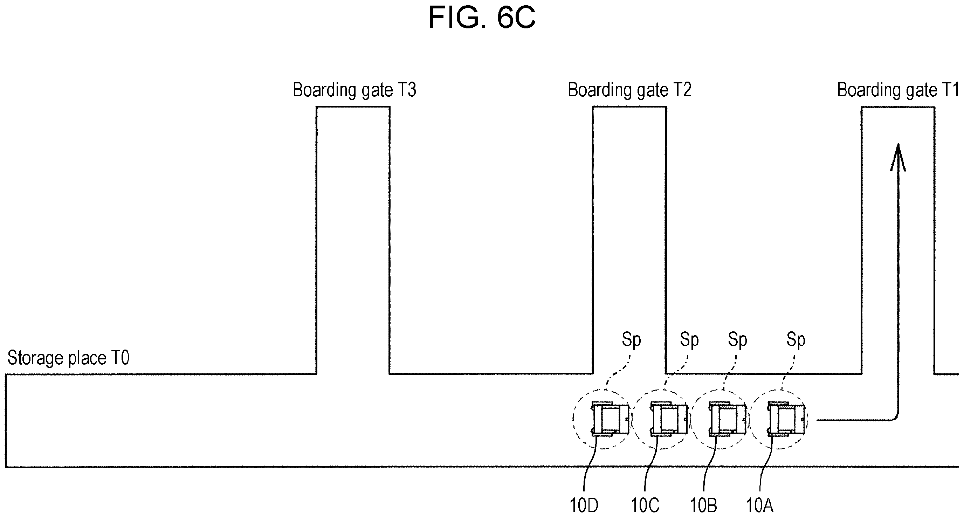

As illustrated in FIG. 6C, when a platoon of the plurality of moving objects 10A to 10D approaches boarding gate T1, inter-moving-object distance Df of each of moving objects 10B to 10D increases.

Specifically, when the platoon of the plurality of moving objects 10A to 10D approaches boarding gate T1, a travel mode of the platoon is switched from a first travel mode (solid line) to a second travel mode (alternate long and short dash line) as illustrated in FIG. 5.

The second travel mode is a mode in which, when the platoon arrives at the stop place, each of the plurality of moving objects 10A to 10D travels to be able to stop with a predetermined inter-moving-object distance Df2 capable of performing a pivot turn of 180 degrees. Therefore, as illustrated in FIG. 5, inter-moving-object distance Df during the second travel mode is greater than inter-moving-object distance Df2 in consideration of a braking distance and is greater than inter-moving-object distance Df during the first travel mode.

Further, inter-moving-object distance Df2 when travel speed V is zero in the second travel mode (that is, when stopped) is greater than inter-moving-object distance Df1 when travel speed V is zero in the first travel mode. This is because boarding gate T1 which is a target stop place is a dead end, U-turns of the plurality of moving objects are not possible, and boarding gate T1 is a place that requires a pivot turn of 180 degrees at the time of re-moving. That is, the second travel mode is a travel mode when there is a possibility of performing the pivot turn of 180 degrees at the stop place, and the first travel mode is a travel mode when there is no possibility of performing the pivot turn of 180 degrees at the stop place.

From another point of view, in a case of the present exemplary embodiment, the first travel mode exists in consideration of a case where it is not necessary to perform the pivot turn of 180 degrees at the stop place and a possibility of pausing before arriving at the stop place. Inter-moving-object distance Df1 when travel speed V is zero (that is, when stopped) in the first travel mode is smaller than inter-moving-object distance Df2 required for the pivot turn of 180 degrees. Thereby, a length of the stopped platoon is prevented from being unnecessarily lengthened, and an occupied space of the stopped platoon is reduced.

When moving object 10A at the head of the platoon performs a manual travel, an airport staff notifies moving object 10A of approaching boarding gate T1. That is, switching to the second travel mode is performed by the airport staff. The switching to the second travel mode is performed through operator 22 of moving object 10A at the head of the platoon or through a communication terminal to be carried.

When moving object 10A at the head of the platoon performs an autonomous travel, information indicating that, as information of a stop place, the stop place is a place where a U-turn of the moving object is not possible is given previously to control device 30 of moving object 10A by the airport staff. When approaching the stop place (when approaching a distance required to stop with inter-moving-object distance Df2 at the stop place), moving object 10A at the head of the platoon is switched to the second travel mode based on that information.

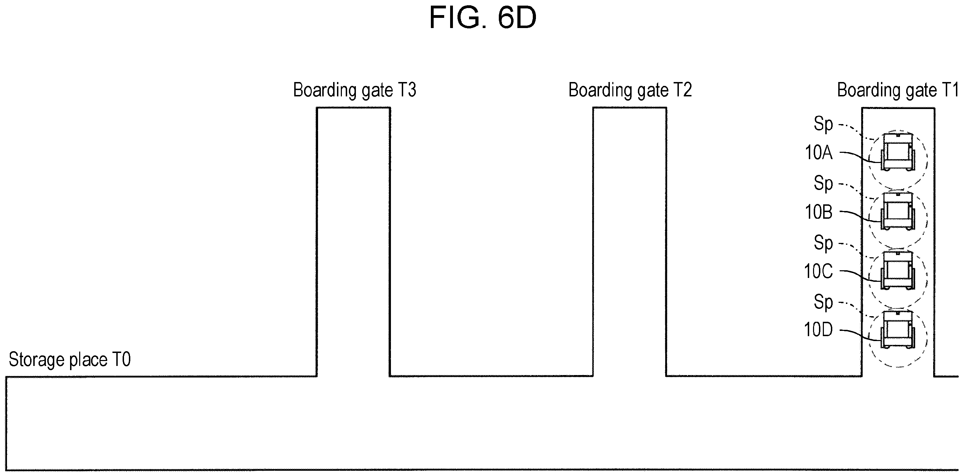

When the switching to the second travel mode is performed in moving object 10A at the head of the platoon, control device 30 of leading moving object 10A outputs an inter-moving-object distance change signal to other moving objects 10B to 10D through communication device 44. As illustrated in FIG. 5, other moving objects 10B to 10D received the inter-moving-object distance change signal are switched to the second travel mode and increase inter-moving-object distance Df. As a result, when reaching boarding gate T1, as illustrated in FIG. 6D, the plurality of moving objects 10A to 10D can stop in a state where inter-moving-object distance Df2 at which a pivot turn can be performed is secured, that is, turn space Sp is secured.

Inter-moving-object distance Df2 required for the pivot turn can be represented by following Equation 1 when described with reference to FIG. 2.

$$Df2 = 2 \times Rp - Lt \quad \dots \quad (\text{Equation } 1)$$

When the plurality of moving objects 10A to 10D stop at boarding gate T1, in a case where a passenger is on board, the passenger gets off the moving object.

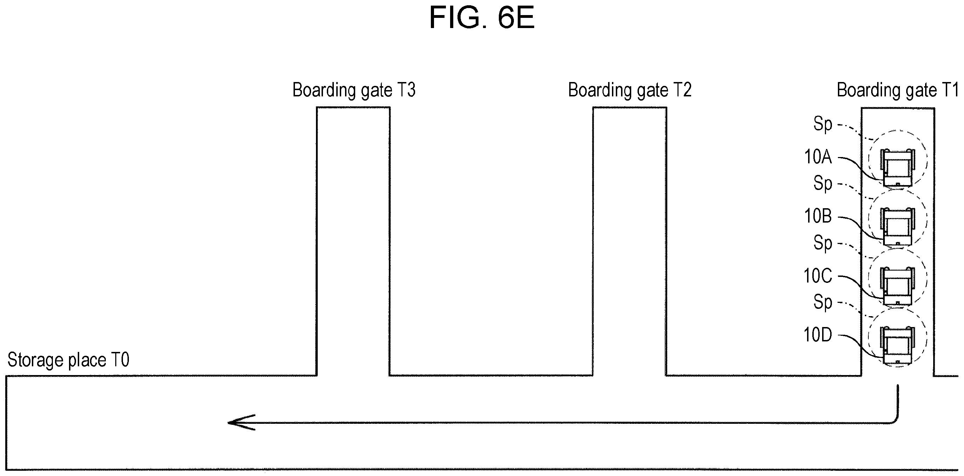

As illustrated in FIG. 6E, each of the plurality of moving objects 10A to 10D stopped in an empty state at boarding gate T1 performs a pivot turn of 180 degrees. Thereby, the platoon turns.

For example, an airport staff performs an instruction input for turning the platoon to moving object 10A at the head of the platoon. The turn instruction input is performed through operator 22 of moving object 10A or through the communication terminal carried by the airport staff.

Control device 30 of moving object 10A at the head of the platoon received the turn instruction input causes moving object 10A to perform a pivot turn of 180 degrees and transmits a turn signal to other moving objects 10B to 10D through communication device 44. Each of other moving objects 10B to 10D received the turn signal performs the pivot turn of 180 degrees. Alternatively, after stopping at the stop place (boarding gate T1) and a predetermined time elapses, each of the plurality of moving objects 10A to 10D may automatically perform the pivot turn of 180 degrees.

Before each of moving objects 10A to 10D performs the pivot turn of 180 degrees, control device 30 of each of moving objects 10A to 10D may determine whether or not the pivot turn can be performed based on a detection result of range sensor 18. That is, range sensor 18 acquires information on a surrounding environment and checks existence of an obstacle that interferes with the pivot turn. For example, when a turn direction at the time of performing the pivot turn of 180 degrees is predetermined (for example, in a case where it is predetermined to turn clockwise when viewing upward), control device 30 of each of moving objects 10A to 10D determines whether or not the pivot turn can be performed in the turn direction based on the detection result of range sensor 18. When the pivot turn in the turn direction cannot be performed, it is determined whether or not a pivot turn in an opposite direction can be performed. A control device of a moving object that cannot perform the pivot turn in either direction notifies an airport staff through operator 22 that the pivot turn cannot be performed. Upon receiving the notification, the airport staff aligns an environment around the moving object (for example, removes an obstacle) such that the pivot turn can be performed.

Each of the plurality of moving objects 10A to 10D performed the pivot turn of 180 degrees checks existence of a front moving object (that is, reflection member 20) based on the detection result of range sensor 18. Moving object 10D which becomes the head of a new platoon due to the pivot turn of 180 degrees cannot check existence of a front moving object, thereby recognizing itself as the head of the new platoon.

Control device 30 of moving object 10D recognized as the head of the new platoon transmits a head declaration signal to moving object 10A which has been the head of the platoon so far. At this time, when receiving the head declaration signal from a plurality of moving objects, or when not able to receive the head declaration signal even when a predetermined time (for example, 60 seconds) elapses after the pivot turn of 180 degrees is performed, moving object 10A notifies the airport staff of occurrence of a head recognition error. Upon receiving the notification, the airport staff manually sets moving object 10D as the head of the new platoon through operator 22 of moving object 10D which is the head of the new platoon, or through a communication terminal to be carried.

Moving object 10A received the head declaration signal from moving object 10D transmits information of other moving objects 10B to 10D configuring the platoon to moving object 10D. At the same time, moving object 10A notifies moving objects 10B to 10C that moving object 10D is the head of the new platoon. Thereafter, moving objects 10B to 10D temporarily cut off communication with moving object 10A. After a while, moving objects 10A to 10C connect communication to moving object 10D which is the head of the new platoon. Thereby, moving object 10D which is the head of the new platoon recognizes that moving objects 10A to 10C exist in the platoon.

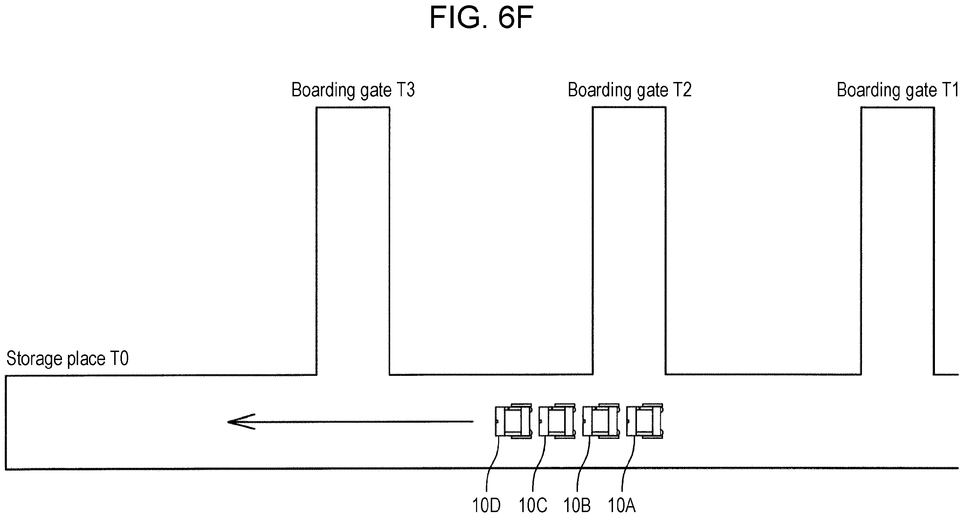

When a new platoon is formed, the plurality of moving objects 10A to 10D move from boarding gate T1 toward storage place T0 in the first travel mode as illustrated in FIG. 6F. That is, moving object 10D travels toward storage place T0 by a manual travel or an autonomous travel, and other moving objects 10A to 10C perform a follow-up travel to moving object 10D.

According to the present exemplary embodiment as described above, each of a plurality of moving objects can move from a place where a U-turn cannot be performed, such as a dead end, without retreating in a state where a relationship of a platoon is maintained.

Although the present disclosure is described above with reference to the above-described exemplary embodiments, the exemplary embodiments of the present disclosure are not limited thereto.

For example, in the case of the above-described exemplary embodiment, a means for stopping a plurality of moving objects in a state of having a predetermined inter-moving-object distance in which a pivot turn of 180 degrees can be performed at a stop place is mounted in each moving object as a control device. However, the exemplary embodiments of the present disclosure are not limited thereto. For example, a control device (for example, a communication terminal carried by a user) located outside the moving object may control travels of the plurality of moving objects. In this case, a travel (travel speed and travel direction) of each moving object and a change in inter-moving-object distance are performed based on a signal transmitted from the control device. In this case, each moving object performs a platoon travel without performing an autonomous travel following a front moving object.

Further, in the case of the above-described exemplary embodiment, the moving object is a moving object on which a user can board. However, the exemplary embodiments of the present disclosure are not limited thereto. For example, the moving object may be an automatic guided robot that transports articles. In a case where the moving object is the automatic guided robot, the moving object does not retreat when moving from a stop place where a U-turn cannot be performed, and thus, it is not necessary for a sensor and a camera for checking the rear to be mounted on the automatic guided robot.

Further, in the case of the above-described exemplary embodiment, when a platoon of a plurality of moving objects stops at a stop place where a U-turn cannot be performed, each of the plurality of moving objects 10A to 10D stops with predetermined inter-moving-object distance Df2 in which a pivot turn of 180 degrees can be performed. However, the exemplary embodiments of the present disclosure are not limited thereto. For example, when a platoon stops at a stop place where a U-turn can be performed, a plurality of moving objects may stop so as to be able to perform a pivot turn of 180 degrees. In this case, when a user sets the stop place of the platoon, it is also set to perform the pivot turn of 180 degrees at the stop place.

That is, in a broad sense, the exemplary embodiment of the present disclosure is a platoon travel system that allows a plurality of moving objects to perform a platoon travel and includes the plurality of moving objects capable of performing a pivot turn and a control device that controls travels of the plurality of moving objects, and when stopping a platoon of the plurality of moving objects, the control device stops each of the moving objects in a state where each of the plurality of moving objects has a predetermined inter-moving-object distance in which a pivot turn of 180 degrees can be performed.

According to the present disclosure, it is possible to move each of a plurality of moving objects from a place where a U-turn is not possible, such as a dead end, without retreating while maintaining the relationship of the platoon.

As described above, a plurality of exemplary embodiments are described as examples of technologies in the present disclosure. Therefore, the accompanying drawings and detailed description are provided.

Therefore, the components described in the accompanying drawings and the detailed description can include not only components essential for solving problems but also components not essential for solving the problems in order to exemplify the above-described technology. Therefore, the fact that the non-essential components are described in the accompanying drawings and detailed description is not immediately determined that the non-essential components are essential.

The present disclosure is applicable to a platoon travel system in which a plurality of moving objects perform a platoon travel.

**Claims**

1. A platoon travel system that allows a plurality of moving objects (10) to perform a platoon travel, the platoon travel system comprising:

   a plurality of moving objects (10) each capable of performing a pivot turn; **characterized in that** each moving object having a control device (30) configured to control the moving object (10), wherein the plurality of moving objects (10) includes:

   a leading moving object (10A) configured to perform a manual travel or an autonomous travel, and
   moving objects (10B, 10C, 10D) other than the leading moving object (10A) configured to follow a moving object (10A) ahead of itself, and

   when stopping a platoon of the plurality of moving objects (10), each control device (30) is configured to stop each of the moving objects (10) in a state where each of the plurality of moving objects (10) has a predetermined inter-moving-object distance (Df2) from an adjacent moving object among the plurality of moving objects (10), the predetermined inter-moving-object distance (Df2) being a distance allowing the moving object (10) to perform a pivot turn of 180 degrees,

wherein after stopping the platoon of the plurality of moving objects (10), each control device (30) is configured to cause its moving object (10) to perform the pivot turn, and

after performing the pivot turn, each of the plurality of moving objects (10) is configured to check existence of a front moving object,

wherein a moving object (10D) that cannot check the existence of the front moving object among the plurality of moving objects (10A, 10B, 10C) is configured to recognize itself as a head of the platoon, and

wherein the moving object (10D) that has recognized itself as the head of the platoon is configured to transmit a head declaration signal to the leading moving object (10A).

2. The platoon travel system of Claim 1,
wherein in a case where a stop place is a place where a U-turn of any one of the plurality of moving objects (10) is not able to be performed, when stopping the platoon of the plurality of moving objects (10) at the stop place, the control device (30) is configured to stop each of the moving objects (10) in a state where each of the plurality of moving objects (10) has the predetermined inter-moving-object distance (Df2).

3. The platoon travel system of Claim 2,
wherein when the platoon of the plurality of moving objects (10) approaches the stop place, the control device (30) is configured to set an inter-moving-object distance (Df) of each of the plurality of moving objects to be greater than the predetermined inter-moving-object distance (Df2), the inter-moving-object distance (Df) being a distance from an adjacent moving object among the plurality of moving objects (10).

4. The platoon travel system of Claim 3,
wherein each of the plurality of moving objects (10) has a control device (30), (§63)
when the leading moving object (10A) approaches the stop place, the control device (30) of the leading moving object (10A) is configured to output an inter-moving-object distance change signal, and
the moving objects are configured to change the inter-moving-object distance based on the inter-moving-object distance change signal.

5. The platoon travel system of Claim 3,

wherein when the leading moving object (10A) approaches the stop place, the control device (30) is configured to output an inter-moving-object distance change signal, and
the moving objects (10) are configured to change the inter-moving-object distance based on the inter-moving-object distance change signal.

**Patentansprüche**

1. Kolonnenfahrsystem, das es einer Vielzahl von sich bewegenden Objekten (10) erlaubt, eine Kolonnenfahrt durchzuführen, wobei das Kolonnenfahrsystem Folgendes umfasst:

eine Vielzahl von sich bewegenden Objekten (10), die jeweils in der Lage sind, eine Schwenkdrehung durchzuführen;
**dadurch gekennzeichnet, dass**:

jedes sich bewegende Objekt eine Steuervorrichtung (30) aufweist, die dazu ausgestaltet ist, das sich bewegende Objekt (10) zu steuern,
wobei die Vielzahl von sich bewegenden Objekten (10) Folgendes umfasst:

ein führendes sich bewegendes Objekt (10A), das dazu ausgestaltet ist, eine manuelle Fahrt oder eine autonome Fahrt durchzuführen, und
sich bewegende Objekte (10B, 10C, 10D), die sich von dem führenden sich bewegenden Objekt (10A) unterscheiden und dazu ausgestaltet sind, einem sich bewegenden Objekt (10A) vor sich selbst zu folgen, und

jede Steuervorrichtung (30) dazu ausgestaltet ist, beim Anhalten einer Kolonne der Vielzahl von sich bewegenden Objekten (10) jedes der sich bewegenden Objekte (10) in einem Zustand anzuhalten, in dem jedes der Vielzahl von sich bewegenden Objekten (10) einen vorbestimmten Abstand (Df2) zwischen sich bewegenden Objekten von einem benachbarten sich bewegenden Objekt unter der Vielzahl von sich bewegenden Objekten (10) aufweist, wobei der vorbestimmte Abstand (Df2) zwischen sich bewegenden Objekten ein Abstand ist, der es dem sich bewegenden Objekt (10) erlaubt, eine Schwenkbewegung von 180 Grad durchzuführen,
wobei jede Steuervorrichtung (30) dazu ausgestaltet ist, nach dem Anhalten der Kolonne der Vielzahl von sich bewegenden Objekte (10) zu bewirken, dass sein sich bewegendes Objekt (10) die Schwenkbewegung durchführt, und
jedes der Vielzahl von sich bewegenden Objekten (10) dazu ausgestaltet ist, nach dem Durchführen der Schwenkbewegung das Vorhandensein eines vorderen sich bewegenden Objekts zu prüfen,
wobei ein sich bewegendes Objekt (10D), welches das Vorhandensein des vorderen sich bewegenden Objekts unter der Vielzahl von sich bewegenden Objekten (10A, 10B, 10C) nicht prüfen kann, dazu ausgestaltet ist, sich selbst als eine Spitze der Kolonne zu erkennen, und
wobei das sich bewegende Objekt (10D), das sich selbst als die Spitze der Kolonne erkannt hat, dazu ausgestaltet ist, ein Spitzenerklärungssignal an das führende sich bewegende Objekt (10A) zu senden.

2. Kolonnenfahrsystem nach Anspruch 1,
wobei die Steuervorrichtung (30) dazu ausgestaltet ist, in einem Fall, in dem ein Anhalteplatz ein Platz ist, an dem eine Kehrtwendung eines beliebigen der Vielzahl von sich bewegenden Objekten (10) beim Anhalten der Kolonne der Vielzahl von sich bewegenden Objekten (10) an dem Anhalteplatz nicht durchgeführt werden kann, jedes der sich bewegenden Objekte (10) in einem Zustand anzuhalten, in dem jedes der Vielzahl von sich bewegenden Objekten (10) den vorbestimmten Abstand (Df2) zwischen sich bewegenden Objekten aufweist.

3. Kolonnenfahrsystem nach Anspruch 2,
wobei die Steuervorrichtung (30) dazu ausgestaltet ist, wenn die Kolonne der Vielzahl von sich bewegenden Objekten (10) sich an den Anhalteplatz annähert, einen Abstand (Df) zwischen sich bewegenden Objekten von jedem der Vielzahl von sich bewegenden Objekten einzustellen, um größer als der vorbestimmte Abstand (Df2) zwischen sich bewegenden Objekten zu sein, wobei der Abstand (Df) zwischen sich bewegenden Objekten ein Abstand von einem benachbarten sich bewegenden Objekt unter der Vielzahl von sich bewegenden Objekten (10) ist.

4. Kolonnenfahrsystem nach Anspruch 3,

wobei jedes der Vielzahl von sich bewegenden Objekten (10) eine Steuervorrichtung (30) aufweist, (§63)

die Steuervorrichtung (30) des führenden sich bewegenden Objekts (10A) dazu ausgestaltet ist, wenn das führende sich bewegende Objekt (10A) sich dem Anhalteplatz annähert, ein Signal zur Änderung des Abstands zwischen sich bewegenden Objekten auszugeben, und
die sich bewegenden Objekte dazu ausgestaltet sind, den Abstand zwischen sich bewegenden Objekten basierend auf dem Signal zur Änderung des Abstands zwischen sich bewegenden Objekten zu ändern.

5. Kolonnenfahrsystem nach Anspruch 3,

wobei die Steuervorrichtung (30) dazu ausgestaltet ist, wenn das führende sich bewegende Objekt (10A) sich dem Anhalteplatz annähert, ein Signal zur Änderung des Abstands zwischen sich bewegenden Objekten auszugeben, und
die sich bewegenden Objekte (10) dazu ausgestaltet sind, den Abstand zwischen sich bewegenden Objekten basierend auf dem Signal zur Änderung des Abstands zwischen sich bewegenden Objekten zu ändern.

## Revendications

1. Système de déplacement en peloton qui permet à une pluralité d'objets mobiles (10) d'effectuer un déplacement en peloton, le système de déplacement en peloton comprenant :

une pluralité d'objets mobiles (10) capables chacun d'effectuer un virage pivotant ; **caractérisé en ce que**
chaque objet mobile a un dispositif de commande (30) configuré pour commander l'objet mobile (10),
dans lequel la pluralité d'objets mobiles (10) comporte :

un objet mobile (10A) menant configuré pour effectuer un déplacement manuel ou un déplacement autonome, et
des objets mobiles (10B, 10C, 10D) autres que l'objet mobile (10A) menant configurés pour suivre un objet mobile (10A) en tête de ceux-ci, et
lors de l'arrêt d'un peloton de la pluralité d'objets mobiles (10), chaque dispositif de commande (30) est configuré pour arrêter chacun des objets mobiles (10) dans un état où chacun de la pluralité d'objets mobiles (10) est à une distance inter-objets mobiles prédéterminée (Df2) d'un objet mobile adjacent parmi la pluralité d'objets mobiles (10), la distance inter-objets mobiles prédéterminée (Df2) étant une distance permettant à l'objet mobile (10) d'effectuer un virage pivotant de 180 degrés,

dans lequel, après avoir arrêté le peloton de la pluralité d'objets mobiles (10), chaque dispositif de commande (30) est configuré pour amener son objet mobile (10) à effectuer le virage pivotant, et

après avoir effectué le virage pivotant, chacun de la pluralité d'objets mobiles (10) est configuré pour vérifier l'existence d'un objet mobile avant,

dans lequel un objet mobile (10D) qui ne peut pas vérifier l'existence de l'objet mobile avant parmi la pluralité d'objets mobiles (10A, 10B, 10C) est configuré pour se reconnaître comme étant en tête du peloton, et

dans lequel l'objet mobile (10D) qui s'est reconnu comme en tête du peloton est configuré pour transmettre un signal de déclaration de tête à l'objet mobile (10A) menant.

2. Système de déplacement en peloton de la revendication 1,

dans lequel, dans le cas où un point d'arrêt est un point où un demi-tour de l'un quelconque de la pluralité d'objets mobiles (10) ne peut être effectué lors de l'arrêt du peloton de la pluralité d'objets mobiles (10) au point d'arrêt, le dispositif de commande (30) est configuré pour arrêter chacun des objets mobiles (10) dans un état où chacun de la pluralité d'objets mobiles (10) dispose d'une distance inter-objets mobiles prédéterminée (Df2).

3. Système de déplacement en peloton de la revendication 2,

dans lequel, lorsque le peloton de la pluralité d'objets mobiles (10) s'approche du point d'arrêt, le dispositif de commande (30) est configuré pour régler une distance inter-objets mobiles (Df) de chacun de la pluralité d'objets mobiles pour qu'elle soit supérieure à la distance inter-objets mobiles prédéterminée (Df2), la distance inter-objets mobiles (Df) étant une distance par rapport à un objet mobile adjacent parmi la pluralité d'objets mobiles (10).

4. Système de déplacement en peloton de la revendication 3,

dans lequel chacun de la pluralité d'objets mobiles (10) a un dispositif de commande (30), (§63)

lorsque l'objet mobile (10A) menant s'approche du point d'arrêt, le dispositif de commande (30) de l'objet mobile (10A) menant est configuré pour émettre un signal de modification de distance inter-objets mobiles, et

les objets mobiles sont configurés pour modifier la distance inter-objets mobiles sur la base du signal de modification de distance inter-objets mobiles.

5. Système de déplacement en peloton de la revendication 3,

dans lequel lorsque l'objet mobile (10A) menant s'approche du point d'arrêt, le dispositif de commande (30) est configuré pour émettre un signal de modification de distance inter-objets mobiles, et

les objets mobiles (10) sont configurés pour modifier la distance inter-objets mobiles sur la base du signal de modification de distance inter-objets mobiles.

# FIG. 1A

# FIG. 1B

# FIG. 2

# FIG. 3

# FIG. 4

# FIG. 5

# FIG. 6A

Boarding gate T3          Boarding gate T2          Boarding gate T1

Storage place T0

10D  10C  10B  10A

EP 3 951 545 B1

# FIG. 6B

Boarding gate T3  Boarding gate T2  Boarding gate T1

Storage place T0

10D  10C  10B  10A

## FIG. 6C

Boarding gate T3

Boarding gate T2

Boarding gate T1

Storage place T0

Sp  Sp  Sp  Sp

10D  10C  10B  10A

FIG. 6D

# FIG. 6E

Boarding gate T3    Boarding gate T2    Boarding gate T1

Sp --- 
10A — 
Sp --- 
10B — 
Sp --- 
10C — 
Sp --- 
10D — 

Storage place T0

EP 3 951 545 B1

# FIG. 6F

EP 3 951 545 B1

Boarding gate T3

Boarding gate T2

Boarding gate T1

Storage place T0

10D 10C 10B 10A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001043498 A